(19)

**Europäisches Patentamt**

**European Patent Office**

**Office européen des brevets**

(11) **EP 3 796 584 B1**

(12) **EUROPEAN PATENT SPECIFICATION**

(45) Date of publication and mention
of the grant of the patent:
**04.10.2023 Bulletin 2023/40**

(21) Application number: **19306118.1**

(22) Date of filing: **18.09.2019**

(51) International Patent Classification (IPC):
**H04L 5/00** *(2006.01)*

(52) Cooperative Patent Classification (CPC):
**H04L 5/003; H04L 9/0875; H04W 12/03;
H04W 12/041**

(54) **IMPROVED PHYSICAL LAYER SECURITY IN WIRELESS NETWORKS**

VERBESSERTE SICHERHEIT VON PHYSIKALISCHER SCHICHT IN DRAHTLOSEN
NETZWERKEN

SÉCURITÉ DE COUCHE PHYSIQUE AMÉLIORÉE DANS DES RÉSEAUX SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.03.2021 Bulletin 2021/12**

(73) Proprietor: **Nokia Technologies Oy
02610 Espoo (FI)**

(72) Inventors:
• **ROSE, Luca
91400 ORSAY (FR)**
• **BAKER, Matthew
CAMBRIDGE, C3B 9LX (GB)**
• **JARDEL, Fanny
91290 LA NORVILLE (FR)**

(74) Representative: **Novagraaf Technologies
Bâtiment O2
2, rue Sarah Bernhardt
CS90017
92665 Asnières-sur-Seine Cedex (FR)**

(56) References cited:
**EP-A1- 3 518 491     WO-A1-2016/164031**

**Description**

FIELD

Various example embodiments relate in general to wireless networks and more specifically, to improved physical layer security in such networks.

BACKGROUND

Modern cryptography may be divided into two schools, comprising information-theoretic and complexity-based security. An example of this is disclosed in EP3518491 A1, published 31 July 2019.

Traditionally, only complexity-based security has been used while the use of information-theoretic cryptography has been limited, if any. Information-theoretic cryptography is based on insufficiency of information and hence it does not depend on computational hardness. In other words, information-theoretic cryptography may ensure secure communication, even if unlimited computing power would be available. Information-theoretic cryptography may be considered as unbreakable from the cryptanalytic point of view, because typically there is not enough information for an adversary to break the encryption. The use of information-theoretic cryptography is therefore desirable in many applications.

Physical-Layer Security, PLS, may be seen as one of form information-theoretic cryptography, and PLS may be used to complement and improve security of communications in wireless networks. Using PLS, intrinsic randomness of a wireless transmission channel, i.e. uniqueness of the wireless channel between two physical positions in space and time, may be exploited to guarantee secure communications.

More recently, a need to design new and robust security protocols based on PLS has arisen, because application level security may not be efficient and secure enough for emerging wireless communication systems. PLS may be used as an additional level of protection on top of, or instead of, conventional security schemes. Thus, it would be desirable to exploit PLS to form a well-integrated security solution for wireless communication networks. There is therefore a need to provide improved methods, apparatuses and computer programs to enable secure communications in wireless networks by exploiting PLS.

SUMMARY OF THE INVENTION

According to some aspects, there is provided the subject-matter of the independent claims. Some embodiments are defined in the dependent claims.

According to a first aspect of the present invention, there is provided an apparatus for a first wireless node comprising means for performing, receiving, from a second wireless node, a first signal on a first frequency channel, deriving at least one long-term quantity associated with the first signal and/or the first frequency channel, wherein the long-term quantity is one of a parameter that is substantially invariant over a duration longer than the transmission duration of a first message and a statistic that is measured over a duration longer than the transmission duration of the first message, encrypting the first message using the at least one long-term quantity and transmitting, to the second wireless node, the first encrypted message on a second frequency channel.

In some embodiments of the first aspect, the at least one long-term quantity may comprise at least one of an angle of arrival of the first signal, a beam index used for reception of the first signal, a path loss of the first frequency channel, a covariance matrix of the first frequency channel and coefficients of a delay-Doppler domain representation of the first frequency channel.

In some embodiments of the first aspect, the first frequency channel may be different from the second frequency channel.

In some embodiments of the first aspect, the means may be further configured to perform, identifying reciprocity between the first frequency channel and the second frequency channel, and transmitting a second signal on the second frequency channel at least if reciprocity is identified between the first frequency channel and the second frequency channel.

In some embodiments of the first aspect, the means may be further configured to perform, using the at least one long-term quantity as a seed to a hash function, deriving a security key of the first message using the hash function with the seed and encrypting the first message using the security key of the first message.

In some embodiments of the first aspect, the apparatus may further comprise means for performing, receiving, from the second wireless node, a third signal on the first frequency channel, encrypting a second message using a security key of the first encrypted message and at least one long-term quantity associated with the third signal and/or the first frequency channel and transmitting, to the second wireless node, the second encrypted message on the second frequency channel.

According to a second aspect of the present invention, there is provided an apparatus for a second wireless node comprising means for performing, transmitting, to a first wireless node, a first signal on a first frequency channel, receiving, from the first wireless node, a first encrypted message on a second frequency channel, deriving at least one long-term quantity associated with the first signal and/or the second frequency channel, wherein the long-term quantity is one of a parameter that is substantially invariant over a duration longer than the transmission duration of the first message and a statistic that is measured over a duration longer than the transmission duration of the first message, and decrypting the encrypted first message using the at least one long-term quantity.

In some embodiments of the second aspect, the at least one long-term quantity may comprise at least one of an angle of departure of the first signal, and angle of reception of the second signal, a beam index used for transmission of the first signal, a beam index used for reception of the second signal, a path loss of the second frequency channel, a covariance matrix of the second frequency channel and coefficients of a delay-Doppler domain representation of the second frequency channel.

In some embodiments of the second aspect, the first frequency channel may be different from the second frequency channel.

In some embodiments of the second aspect, the means may be further configured to perform, identifying reciprocity between the first frequency channel and the second frequency channel, receiving a second signal on the second frequency channel at least if reciprocity is identified between the first frequency channel and the second frequency channel and deriving the at least one long-term quantity associated with the first signal using the second signal.

In some embodiments of the second aspect, the means may be further configured to perform using the at least one long-term quantity as a seed to a hash function, deriving a security key of the first message using the hash function with the seed; and decrypting the first message using the security key of the first message.

In some embodiments of the second aspect, the means may be further configured to perform transmitting, to the first wireless node, a third signal on the first frequency channel, receiving, from the first wireless node, a second encrypted message on the second frequency channel and decrypting the second encrypted message using a security key of the first encrypted message and at least one long-term quantity associated with the third signal and/or the second frequency channel.

In some embodiments of the first or the second aspect, the means may comprise at least one processor, and at least one memory including computer program code, the at least one memory and computer program code configured to, with the at least one processor, cause the performance of the apparatus.

According to a third aspect, there is provided a first method, for a first wireless node, comprising receiving, from a second wireless node, a first signal on a first frequency channel, deriving at least one long-term quantity associated with the first signal and/or the first frequency channel, wherein the long-term quantity is one of a parameter that is substantially invariant over a duration longer than the transmission duration of a first message and a statistic that is measured over a duration longer than the transmission duration of the first message, encrypting the first message using the at least one long-term quantity and transmitting, to the second wireless node, the first encrypted message on a second frequency channel.

According to a fourth aspect, there is provided a second method, for a second wireless node, comprising transmitting, to a first wireless node, a first signal on a first frequency channel, receiving, from the first wireless node, a first encrypted message on a second frequency channel, deriving at least one long-term quantity associated with the first signal and/or the second frequency channel, wherein the long-term quantity is one of a parameter that is substantially invariant over a duration longer than the transmission duration of the first message and a statistic that is measured over a duration longer than the transmission duration of the first message, and decrypting the encrypted first message using the at least one long-term quantity.

According to a fifth aspect of the present invention, there is provided an apparatus comprising at least one processing core, at least one memory including computer program code, the at least one memory and the computer program code being configured to, with the at least one processing core, cause the apparatus at least to perform, receive, from a second wireless node, a first signal on a first frequency channel, derive at least one long-term quantity associated with the first signal and/or the first frequency channel, wherein the long-term quantity is one of a parameter that is substantially invariant over a duration longer than the transmission duration of a first message and a statistic that is measured over a duration longer than the transmission duration of the first message, encrypt the first message using the at least one long-term quantity and transmit, to the second wireless node, the first encrypted message on a second frequency channel.

According to a sixth aspect of the present invention, there is provided an apparatus comprising at least one processing core, at least one memory including computer program code, the at least one memory and the computer program code being configured to, with the at least one processing core, cause the apparatus at least to perform transmit, to a first wireless node, a first signal on a first frequency channel, receive, from the first wireless node, a first encrypted message on a second frequency channel, derive at least one long-term quantity associated with the first signal and/or the second frequency channel, wherein the long-term quantity is one of a parameter that is substantially invariant over a duration longer than the transmission duration of the first message and a statistic that is measured over a duration longer than the transmission duration of the first message, and decrypt the encrypted first message using the at least one long-term quantity.

According to a seventh aspect of the present invention, there is provided non-transitory computer readable medium having stored thereon a set of computer readable instructions that, when executed by at least one processor, cause an apparatus to at least perform the first method.

According to an eighth aspect of the present invention, there is provided non-transitory computer readable medium having stored thereon a set of computer readable instructions that, when executed by at least one processor, cause an apparatus to at least perform the second method.

According to a ninth aspect of the present invention, there is provided a computer program configured to perform the first method. According to a tenth aspect of the present invention, there is provided a computer program configured to perform the second method.

BRIEF DESCRIPTION OF THE DRAWINGS

FIGURE 1 illustrates an exemplary network scenario in accordance with at least some embodiments of the present invention;

FIGURE 2 illustrates an exemplary process and signalling in accordance with at least some embodiments of the present invention;

FIGURE 3 illustrates an example apparatus capable of supporting at least some embodiments of the present invention;

FIGURE 4 illustrates a flow graph of a first method in accordance with at least some embodiments of the present invention; and

FIGURE 5 illustrates a flow graph of a second method in accordance with at least some embodiments of the present invention.

EMBODIMENTS

Physical layer security of wireless communication networks may be improved by the procedures described herein. In more detail, long-term quantities associated with a signal, such as an angle of arrival/departure of the signal, may be used as a seed for encryption. For instance, the signal may be transmitted, possibly on a first frequency channel, and at least one long-term quantity associated with the signal may be determined and used for encryption of a message upon reception of the signal. The encrypted message may be transmitted, possibly on a second frequency channel, and the at least one long-term quantity associated with the signal may be used for decryption of the encrypted message as well. Alternatively, or in addition, if reciprocity of the first frequency channel and the second frequency channel is assumed, at least one long-term quantity associated with the first and the second frequency channel may be used for encryption and decryption.

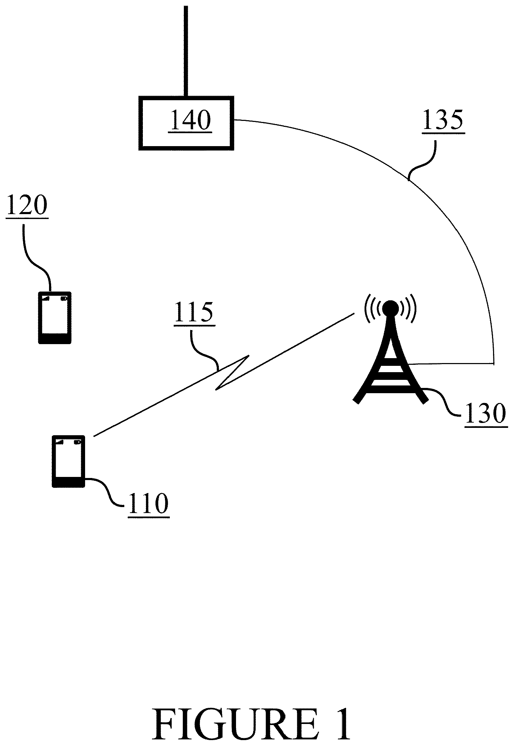

FIGURE 1 illustrates an exemplary network scenario in accordance with at least some embodiments of the present invention. The exemplary network scenario of FIGURE 1 may comprise first wireless terminal 110, second wireless terminal 120, wireless network node 130 and core network 140.

First wireless terminal 110 and second wireless terminal 120 may comprise, for example, a User Equipment, UE, a smartphone, a cellular phone, a Machine-to-Machine, M2M, node, machine-type communications node, an Internet of Things, IoT, node, a car telemetry unit, a laptop computer, a tablet computer or, indeed, any kind of suitable wireless user device or mobile station, i.e., a terminal.

In the exemplary network scenario system of FIGURE 1, first wireless terminal 110 may be attached, or connected to, wireless network node 130 over air interface 115 for wireless communications. Wireless network node 130 may be considered for example as a serving Base Station, BS, of first wireless terminal 110. In general, first wireless terminal 110, second wireless terminal 120 and wireless network node 130 may be referred to as wireless nodes. For instance, first wireless terminal 110 may be referred to as a first wireless node and wireless network node may be referred to as a second wireless node.

Air interface 115 between first wireless terminal 110 and wireless network node 130 may be configured in accordance with a Radio Access Technology, RAT, which both first wireless terminal 110 and wireless network node 130 are configured to support. Air interface 115 may comprise, e.g., one or more beams between first wireless terminal 110 and wireless network node 130. Examples of cellular RATs include Long Term Evolution, LTE, New Radio, NR, which may also be known as fifth generation, 5G, and MulteFire. On the other hand, examples of non-cellular RATs include Wireless Local Area Network, WLAN, and Worldwide Interoperability for Microwave Access, WiMAX.

In case of cellular RATs, wireless network node 130 may be referred to as a BS and wireless terminals may be referred to as UEs. For example, in the context of LTE, wireless node 130 may be referred to as eNB while in the context NR, wireless node 130 may be referred to as gNB. On the other hand, for example in the context of WLAN, wireless node 130 may be referred to as an access point. In any case, embodiments of the present invention are not restricted to any particular wireless technology. Instead, embodiments of the present invention may be exploited in any wireless communication system wherein it is desirable to perform secure communications.

Wireless network node 130 may be connected, directly or via at least one intermediate node, with core network 140. Wireless network node 130 may be connected to core network 140 via wired connection 135. Core network 140 may be, in turn, coupled with another network (not shown in FIGURE 1), via which connectivity to further networks may be obtained, for example via a worldwide interconnection network.

In some embodiments of the present invention, wireless network node 130 may be referred to as a legitimate receiver of the message. In addition, first wireless terminal 110 may be referred to as a transmitter and second wireless terminal 120 may be referred to as a potential eavesdropper. Wireless network node 130 and first wireless terminal 110 would like to communicate in a secure manner over air interface while second wireless terminal 120 may try to intercept and decrypt communications between wireless network node 130 and first wireless terminal 110, even though second wireless terminal 120 is not a legitimate receiver of said communications.

In general, evolution of wireless communications poses new challenges for privacy and security. The security mechanisms used at the moment are typically based on classical cryptography. In case of classical cryptography, a security key may be used to scramble or perform "exclusive or" -operation, XOR, for a data transmission. The security key may then be used to decrypt, i.e., decipher the data transmission. Secrecy of the security key and the algorithm, such as scrambling or XOR, which is used to create the security key, are fundamental for security. However, different types of attacks, such as man-in-the-middle attacks, and vulnerabilities of algorithms have shown that classical cryptography is not completely secure as the security keys may be discovered by a malicious party, such as a non-legitimate receiver second wireless terminal 120.

Classical cryptography may not be suitable for IoT communications either. IoT devices typically have limited resources, such as processing power, communication capabilities and battery, and thus the use of classical cryptography would often be unsuitable for IoT devices.

Physical Layer Security, PLS, may be used to further improve secrecy of wireless communication. PLS may be used to create an extra shield of protection for example, to hinder success of attacks. As opposed to classical cryptography, wherein a security key is for example stored in a Subscriber Identity Module, SIM, card or generated using a hash function stored in the SIM card, in PLS the security key may be generated from one or more physical, measurable variables which are known and private. For instance, the variables may be only known by a legitimate receiver, such as wireless network node 130, and a transmitter, such as first wireless terminal 110. Said physical, measurable variables may be referred to as statistics, quantities and attributes as well.

Said physical, measurable variables may be estimated at both sides, at first wireless terminal 110 and wireless network node 130, independently. The aim is that the following criteria would be met:

- Privacy: Only the two parties, such as first wireless terminal 110 and wireless network node 130, can estimate the variables.

- Complexity: No malicious user, such as second wireless terminal 120, can reliably guess the variables.

- Accuracy: The two parties, such as first wireless terminal 110 and wireless network node 130, can estimate the variables in a reliable way.

Embodiments of the present invention address the above mentioned challenges by providing a secret key establishment scheme, which may exploit uniqueness of a wireless channel and/or transmitted signal for generating security keys, thereby enabling secure communication. Some embodiments of the present invention are described using first wireless terminal 110 and wireless network node 130 as examples, but it should be noted that embodiments of the present invention may be applied to any transmitter-receiver pair, such as a first wireless node and a second wireless node, in general.

In some embodiments of the present invention, both, first wireless terminal 110 and wireless network node 130, may estimate at least one physical, measurable variable, such as a long-term quantity. Said long-term quantity may be a parameter that is substantially invariant over a duration longer, e.g., significantly longer, than the transmission duration of a message to be encrypted. Alternatively, said long-term quantity may be a statistic that is measured over a duration longer, e.g., significantly longer, than the transmission duration of a message to be encrypted. In some embodiments of the present invention, significantly longer may refer to longer than a coherence time, the coherence time being a duration of time during which a channel impulse response may be considered as non-varying. Said at least one long-term quantity may be referred to as a non-instantaneous attribute as well.

Moreover, said at least one long-term quantity may be associated with a first signal transmitted from wireless network node 130 to first wireless terminal 110. Alternatively, or in addition, said at least one long-term quantity may be associated with a frequency channel. Said at least one long-term quantity may comprise at least one of the following:

- Angle of arrival, such as Azimuth angle of Arrival, AoA, or Zenith angle of Arrival, ZoA, or a 3D angle of arrival, of the signal,

- Angle of departure, such as Azimuth angle of Departure, AoD, or Zenith angle of Departure, ZoD, or a 3D angle of departure, of the signal,

- Transmit or receive beam index,

- Pathloss between the transmitter and the receiver,

- Covariance matrix of a channel between the transmitter and the receiver, possibly calculated over a period N.

- Coefficients of a delay-Doppler domain representation of the channel between the transmitter and the receiver.

Angle of arrival, angle of departure and transmit/receive beam index may be referred to as long-term quantities associated with the signal. Path loss, Covariance matrix of the channel and coefficients of a delay-Doppler domain representation of the channel may be referred to as long-term quantities associated with the frequency channel.

Angle of arrival and angle of departure may be directly available at first wireless terminal 110 and wireless network node 130 without any additional information exchange. In addition, angle of arrival and angle of departure may be related to transmit/receive beam index. In some embodiments of the present invention, use of angle of arrival and angle of departure may be limited to line-of-sight scenarios. However, transmit/receive beam indexes may be exploited also in case of strong reflection, i.e., non-line-of-sight scenarios. Exploitation of transmit/receive beam indexes may require an additional feedback mechanism though and hence use of angle of arrival and angle of departure may provide a more secure solution compared to transmit/receive beam indexes.

As an example, an angle of arrival, an angle of departure and a path loss may be computed based on both, uplink and downlink signals/messages. In case of uplink, the angle of arrival (AoA/ZoA) at wireless network node 130 may correspond to the angle of departure (AoD/ZoD) at first wireless terminal, and vice versa. The angle of arrival, the angle of departure and the path loss may be available at both sides of the communication and can thus be estimated based on the reciprocity of the angle of arrival, the angle of departure and the path loss, even if different frequency channels would be used for uplink and downlink transmissions.

As said, in case of AoA/ZoA and assuming line-of-sight transmission, the AoD/ZoD of the transmitter of a signal and the AoA/ZoA of the receiver of the signal may correspond. Elevation and inclination may then be inferred using trigonometric formulas, e.g., by knowing mechanical tilting. However, in case of non-line-of-sight scenarios, the AoD/ZoD of the transmitter of the signal and the AoA/ZoA of the receiver the signal may not correspond. Thus, in some embodiments, a mechanism for validation of the security key, or for validation of the line-of-sight scenario, may need to be in place.

In some embodiments of the present invention, a transmit beam index may be transmitted, e.g., during beam acquisition. For instance, first wireless terminal 110 may feed back the transmit beam index to wireless network node 130. Thus, the transmit beam index may be exploited as at least one long-term quantity, even if wireless network node 130 would not follow the transmit beam index transmitted by first wireless terminal 110. In some embodiments, the transmit beam index transmitted by first wireless terminal 110 may be thus used to provide additional level of security, e.g., on top of the angle of arrival/departure. The transmit beam index does not depend on the used frequency either and hence the transmit beam index may be exploited even if different frequency channels would be used for uplink and downlink transmissions.

The covariance matrix of the channel between the transmitter and the receiver, i.e., first wireless terminal 110 and wireless network node 130, may summarize all the other long-term quantities. Thus, the covariance matrix of the channel may be considered as the most secure choice. The covariance matrix of the channel may be estimated independently by both, first wireless terminal 110 and wireless network node 130, for example by assuming that channel realizations are known at both sides. That is to say, the covariance matrix may be estimated independently at both sides only if the transmission channel matrix is known at both sides of the transmission. Otherwise, the covariance matrix of the channel may be fed back, e.g., from first wireless terminal 110 to wireless network node 130.

For instance, in some embodiments of the present invention, channel estimation may be performed using Channel State Information - Reference Signals, CSI-RS. CSI-RSs may be used by first wireless terminal 110 to estimate a channel. First wireless terminal 110 may then estimate a best precoder for the channel and feed the estimated best precoder back as an approximated Precoding Matrix Indicator, PMI. The approximated PMI may thus become known at both first wireless terminal 110 and wireless network node 130, and can be used to compute the covariance matrix.

In some embodiments of the present invention, an explicit CSI may be exploited and thus, the channel matrix created based on the explicit CSI may be used to compute the covariance matrix. Moreover, if reciprocity based CSI is used, the communication between first wireless terminal 110 and wireless network node 130 may become even more resilient to attacks, because transmission of channel feedback is not necessary.

In some embodiments of the present invention, said at least one a long-term quantity associated with a signal and/or frequency channel, may be used as a seed to a hash function to create a security key, i.e., a cryptographic key, for a first message. For instance, first wireless terminal 110 and wireless network node 130 may estimate said at least one long-term quantity associated with a first signal at time instant (or frame) *n=1*, the first signal being transmitted from wireless network node 130 to first wireless terminal 110, and generate the security key of the first message as follows:

$$key(1) = HASH(LTS_1), \qquad (1)$$

wherein *HASH* denotes a hash function and $LTS_1$ denotes at least one long-term quantity associated with a first signal at time instant (or frame) *n=1*.

The security key of the first message may then be used together with a hash function, XOR or scramble the first message, possibly at any level of a stack (Packet Data Convergence Protocol, PDCP, application level, physical layer,... ), thereby creating a first encrypted message. The first encrypted message may be then transmitted from first wireless terminal 110 to wireless network node 130. Upon receiving the first encrypted message, wireless network node 130 may decrypt the first encrypted message using said at least one quantity associated with the first signal. Wireless terminal 110 may also transmit a second signal to wireless network node 130 together with the first encrypted message. In some embodiments of the present invention, first wireless terminal 110 and wireless network node 130 may store the security key of the first message.

After the transmission of the first encrypted message, another estimation of at least one a long-term quantity may be done at time instant (or frame) *n=2*. Again both, first wireless terminal 110 and wireless network node 130, may estimate the at least one long-term quantity, possibly associated with a third signal. A security key for a second message may be then generated using the security key of the first message and the at least one long-term quantity associated with the third signal. That is to say, the security key of the second message, *key(2)*, at time instant (or frame) *n=2* may be generated as follows:

$$key(2) = f_c(key(1), LTS_2), \qquad (2)$$

wherein *key(2)* denotes the security key of the second message generated at time instant (or frame) *n=2*, *key(1)* denotes the security key of the first message generated at time instant (or frame) *n=1*, $LTS_2$ denotes at least one long-term quantity associated with the third signal and $f_c$ denotes a function, the function being a hash, scrambling, a XOR or any other cryptographic function, possibly defined by a standard, such as a 3rd Generation Partnership Project, 3GPP, standard.

In general, an encrypted message *M(n)* at time instant (or frame) *n,* may be formed as follows:

$$M(n) = f_c(N(n), key(n)), \qquad (3)$$

wherein *N(n)* denotes a original (nth) message at time instant at time instant (or frame) *n* and *key(n)* denotes a security key of the nth message generated at time instant (or frame) *n*.

In some embodiments, a nth security key, *key(n)*, may be formed as follows:

$$Key(n) = key(n-1) \ XOR \ HASH(LTS_n) \ XOR \ HASH(l_n), \quad (4)$$

wherein *key(n - 1)* denotes a security key at time instant (or frame) *n-1* and $LTS_n$ denotes at least one long-term quantity associated with a signal transmitted at time instant (or frame) *n-1* and $l_n$ denotes a quantity that may have been exchanged through a secure channel previously, thereby providing an extra security layer. *XOR* denotes the exclusive OR operation.

For instance, *XOR* may be applied bit-by-bit to the entire message to be cyphered. In some embodiments of the present invention, an iterative system may be used, wherein a security key may be reinforced every *M* frames for example.

In some embodiments of the present invention, high correlation between long-term quantities of the two links, i.e., quantities of a bi-directional channel, from the transmitter to the receiver and from the receiver to the transmitter, is hence exploited. High correlation between long-term quantities of the two links of the bi-directional channel may be exploited even if the two links would be operating on different frequency channels, e.g., for typical Frequency Division Duplexing, FDD, spacings.

Moreover, embodiments of the present invention may be applied for both, uplink and downlink directions. In addition, embodiments of the present invention may be applied for both, FDD and Time Division Duplexing, TDD, systems. In general, a PLS long-term quantity associated with the signal or a frequency channel may be used as a seed to a hash function. Such seed may be used with any hashing function, known by both the transmitter and the receiver, to produce the security key, i.e., the cryptographic key. The security key may then be used to encrypt a message.

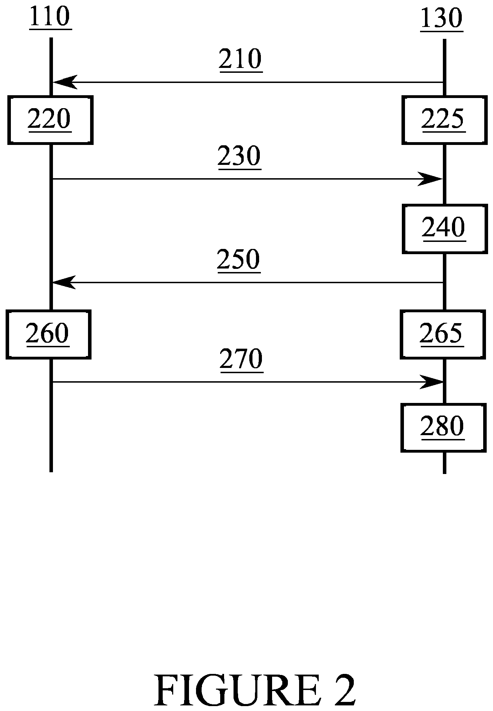

FIGURE 2 illustrates an exemplary process and signalling in accordance with at least some embodiments of the present invention. With reference to FIGURE 1, FIGURE 2 demonstrates operation of first wireless terminal 110 and wireless network node 130, and signalling between first wireless terminal 110 and wireless network node 130. In general, first wireless terminal 110 may be referred to as a first wireless node and wireless network node may be referred to as a second wireless node.

At step 210, wireless network node 130 may transmit a first signal to first wireless terminal 110. The first signal may be transmitted on a first frequency channel. Upon receiving the first signal, first wireless terminal 110 may, at step 220, determine at least one long-term quantity associated with the first signal and/or the first frequency channel. First wireless terminal 110 may further generate a security key of the first message based on the at least one long-term quantity associated with the first signal and/or the first frequency channel. The long-term quantity associated with the first signal and/or the first frequency channel may be one of a parameter that is substantially invariant over a duration longer than the transmission duration of a first message and a statistic that is measured over a duration longer than the transmission duration of the first message.

For instance, first wireless terminal 110 may determine an angle of arrival of the first signal and generate the security key of the first message based on the angle of arrival of the first signal. Alternatively, or in addition, first wireless terminal 110 may determine a covariance matrix of the first frequency channel by measuring a reference signal transmitted on the first frequency channel. Then, first wireless terminal 110 may generate the security key of the first message using the angle of arrival of the first signal and/or the covariance matrix of the first frequency channel.

First wireless terminal 110 may also, at step 220, encrypt a first message using the at least one long-term quantity associated with the first signal and/or the first frequency channel. The at least one long-term quantity may be used as a seed to a hash function for example and the security key of the first message may be derived using the hash function with the seed. Then, first wireless terminal 110 may encrypt the first message using the security key of the first message. In some embodiments of the present invention, first wireless terminal 110 may store the security key of the first message, for example to a memory of first wireless terminal 110 or to a memory in some other location.

Also, wireless network node 130 may, at step 225, determine said at least one long-term quantity associated with the first signal after transmission of the first signal. Wireless network node 130 may further generate the security key of the first message based on the at least one long-term quantity associated with the first signal. For instance, wireless network node 130 may determine an angle of departure of the first signal and generate the security key of the first message based on the angle of departure of the first signal. The at least one long-term quantity may be used as a seed to a hash function for example and the security key of the first message may be derived using the hash function with the seed. In some embodiments of the present invention, wireless network node 130 may store the security key of the first message, for example to a memory of wireless network node 130 or to a memory in some other location.

At step 230, first wireless terminal 110 may transmit the first encrypted message to wireless network node 130. The first encrypted message may be transmitted on a second frequency channel. In some embodiments of the present invention, the first and the second frequency channels may be different, e.g., due to the use of FDD. Upon receiving the first encrypted message from first wireless terminal 110, wireless network node 130 may determine at least one long-term quantity associated with the second frequency channel. Wireless network node 130 may for example determine a covariance matrix of the second frequency channel. Then, wireless network node 130 may generate the security key of the first message the covariance matrix of the second frequency channel, e.g., by assuming reciprocity of the first frequency channel and the second frequency channel.

In some embodiment of the present invention, first wireless terminal 110 may transmit a second signal on the second frequency channel as well. The second signal may be transmitted together with the first encrypted message, for example upon identifying reciprocity between the first frequency channel and the second frequency channel. First wireless terminal 110 may transmit a second signal, for example a reference signal which may comprise a waveform that is known a priori, to enable wireless network node 130 to derive the at least one long-term quantity according to the assumption of reciprocity between the first frequency channel and the second frequency channel such that the at least one long-term quantity can be assumed to be the same for the first frequency channel and the second frequency channel. Thus, wireless network node 130 may receive the second signal, for example at least if reciprocity is identified between the first frequency channel and the second frequency channel. If needed, wireless network node 130 may store the security key of the first message at this point as well.

At step 240, wireless network node 130 may decrypt the first message using the at least one long-term quantity associated with the first signal and/or the second frequency channel. The at least one long-term quantity may be used as a seed to a hash function for example and the security key of the first message may be derived using the hash function with the seed. Then, wireless network node 110 may, at step 240, decrypt the first message using the security key. In some embodiments of the present invention, if the second signal is received by wireless network node 130, wireless network node may use the second signal to derive the at least one quantity associated with the first signal and/or the first frequency channel, if reciprocity of the first frequency channel and the second frequency channel can be assumed.

At step 250, wireless network node 130 may transmit a third signal to first wireless terminal 110. The third signal may be transmitted on the first frequency channel. Upon receiving the third signal, first wireless terminal 110 may, at step 260, determine at least one long-term quantity associated with the third signal and/or the first frequency channel. First wireless terminal 110 may also, at step 260, encrypt a second message using the at least one long-term quantity associated with the third signal and/or the first frequency channel. The at least one long-term quantity associated with the third signal and/or the first frequency channel may be used as a seed to a hash function for example and the security key of the second message may be derived using the hash function with the seed. Then, first wireless terminal 110 may encrypt the second message using the security key of the second message.

In some embodiments of the present invention, first wireless terminal 110 may encrypt the second message using the security key of the first encrypted message, for example in accordance with Equation (2) or (4). The security key of the first encrypted message may be retrieved from the memory of first wireless terminal 110 for the encryption.

Also, wireless network node 130 may, at step 265, determine said at least one long-term quantity associated with the third signal, e.g., after transmission of the third signal. Wireless network node 130 may further generate the security key of the second message based on the at least one long-term quantity associated with the third signal. For instance, wireless network node 130 may determine an angle of departure of the third signal and generate the security key of the second message based on the angle of departure of the third signal. The at least one long-term quantity may be used as a seed to a hash function for example and the security key of a second message may be derived using the hash function with the seed.

At step 270, first wireless terminal 110 may transmit the second encrypted message to wireless network node 130. The second encrypted message may be transmitted on the second frequency channel. Upon receiving the second encrypted message from first wireless terminal 110, wireless network node 130 may determine at least one long-term quantity associated with the second frequency channel. Wireless network node 130 may for example determine a covariance matrix of the second frequency channel. Then, wireless network node 130 may generate the security key of the second message using the covariance matrix of the second frequency channel, e.g., by assuming reciprocity of the first frequency channel and the second frequency channel.

At step 280, wireless network node 130 may decrypt the second message using the at least one long-term quantity associated with the third signal and/or the second frequency channel. Then, wireless network node 110 may, at step 280, decrypt the second message using the security key of the second message. In some embodiments of the present invention, wireless network node 130 may decrypt the second message using the security key of the first encrypted message, for example in accordance with Equation (2) or (4).

In some embodiments of the present invention, the first and the second frequency channels may be the same, if for example TDD is used. On the other hand, in some embodiments, the first and the second frequency channels may be different, if for example FDD is used.

Embodiments of the present therefore provide a solution for a physical layer encryption. More specifically, at least some embodiments of the present invention provide a solution which does not generate additional overhead, e.g., by avoiding additional signalling. At least one long-term quantity associated with a signal and/or a frequency channel may be estimated and used for encryption. The at least one long-term quantity may be estimated independently by both, the transmitter and the receiver of the signal, and hence the signalling load is minimized. Consequently, embodiments of the present invention allow ease of design and implementation. Embodiments of the present invention may be exploited for example in networks operating in accordance with 3GPP standards, such as in 5G/NR networks.

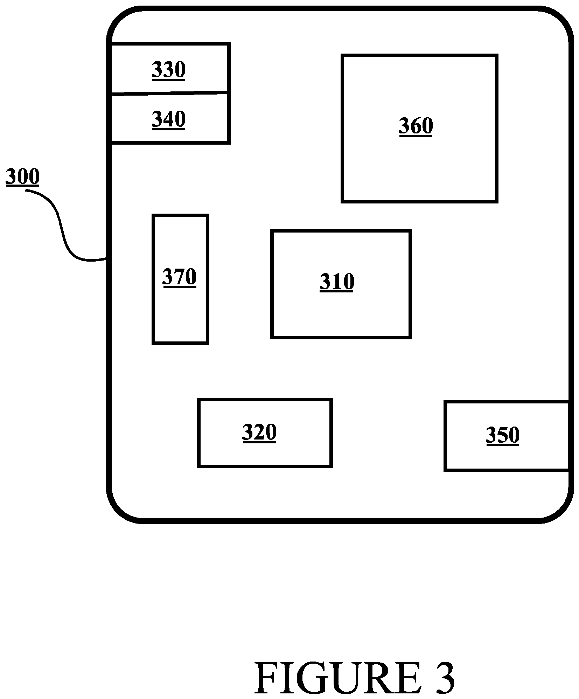

FIGURE 3 illustrates an example apparatus capable of supporting at least some embodiments of the present invention. Illustrated is device 300, which may comprise, for example, first wireless terminal 110 or wireless network node 130 of FIGURE 1, or device 300 may be configured to control the functioning thereof, possibly when installed therein. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Global System for Mobile communication, GSM, Wideband Code Division Multiple Access, WCDMA, 5G/NR, Long Term Evolution, LTE, IS-95, Wireless Local Area Network, WLAN, Ethernet and/or Worldwide interoperability for Microwave Access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention as defined by the claims.

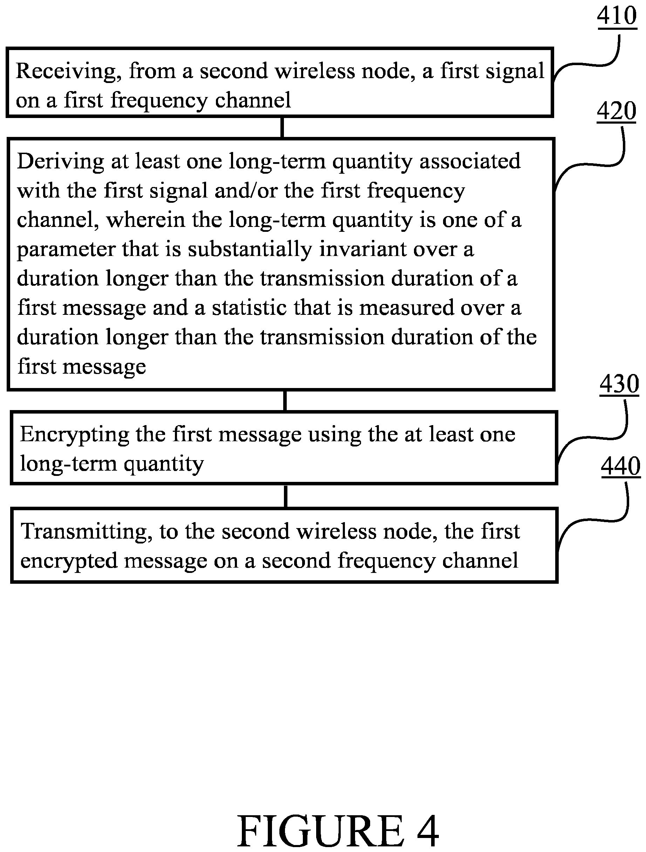

FIGURE 4 is a flow graph of a first method in accordance with at least some embodiments of the present invention. The phases of the illustrated first method may be performed by a first wireless node, such as wireless terminal 110, or by a control device configured to control the functioning thereof, possibly when installed therein.

The first method may comprise, at step 410, receiving, from a second wireless node, a first signal on a first frequency channel. The first method may also comprise, at step 420, deriving at least one long-term quantity associated with the first signal and/or the first frequency channel, wherein the long-term quantity is one of a parameter that is substantially invariant over a duration longer than the transmission duration of a first message and a statistic that is measured over a duration longer than the transmission duration of the first message. In addition, the first method may comprise, at step 430, encrypting the first message using the at least one long-term quantity. Finally, the first method may comprise, at step 440, transmitting, to the second wireless node, the first encrypted message on a second frequency channel.

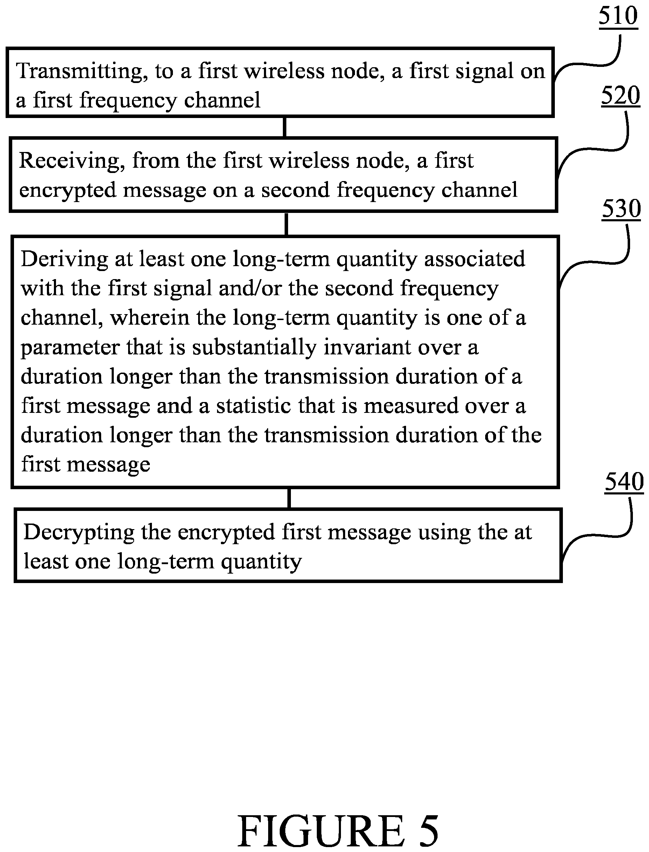

FIGURE 5 is a flow graph of a second method in accordance with at least some embodiments of the present invention. The phases of the illustrated second method may be performed by a second wireless node, such as wireless network node 130, or by a control device configured to control the functioning thereof, possibly when installed therein.

The second method may comprise, at step 510, transmitting, to a first wireless node, a first signal on a first frequency channel. The second method may also comprise, at step 520, receiving, from the first wireless node, a first encrypted message on a second frequency channel. In addition, the second method may comprise, at step 530, deriving at least one long-term quantity associated with the first signal and/or the second frequency channel, wherein the long-term quantity is one of a parameter that is substantially invariant over a duration longer than the transmission duration of the first message and a statistic that is measured over a duration longer than the transmission duration of the first message. Finally, the second method may comprise, at step 530, decrypting the encrypted first message using the at least one long-term quantity.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In an exemplary embodiment, an apparatus, such as, for example, first wireless terminal 110 or wireless network node 130, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, first wireless terminal 110 or wireless network node 130, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in communication networks, wherein secure transmission over air interface is required, such as in networks operating in accordance with 3GPP standards.

ACRONYMS LIST

| | |
|---|---|
| 3GPP | 3rd Generation Partnership Project |
| AoA | Azimuth angle of Arrival |
| BS | Base Station |
| CSI | Channel State Information |
| FDD | Frequency Division Duplexing |
| GSM | Global System for Mobile communication |
| IMSI | International Mobile Subscriber Identity |
| IoT | Internet of Things |
| LTE | Long-Term Evolution |
| NFC | Near-Field Communication |
| PDCP | Packet Data Convergence Protocol |
| PLS | Physical Layer Security |
| PMI | Precoding Matrix Indicator |
| NR | New Radio |
| RAT | Radio Access Technology |
| SIM | Subscriber Identity Module |
| TDD | Time Division Duplexing |
| UE | User Equipment |
| UI | User Interface |
| WCDMA | Wideband Code Division Multiple Access |
| WiMAX | Worldwide Interoperability for Microwave Access |
| WLAN | Wireless Local Area Network |
| XOR | "exclusive or" -operation |
| ZoA | Zenith angle of Arrival |

REFERENCE SIGNS LIST

| | |
|---|---|
| 110, 120 | Wireless terminal, e.g., user equipment |
| 130 | Wireless network node, e.g., base station |
| 115, 135 | Interfaces |
| 140 | Core network or central controller |

(continued)

| 210 - 280 | Signaling steps in FIGURE 2 |
|-----------|----------------------------|
| 300 - 370 | Structure of the apparatus of FIGURE 3 |
| 410 - 440 | Phases of the first method of FIGURE 4 |
| 510 - 540 | Phases of the second method of FIGURE 5 |

**Claims**

1. An apparatus for a first wireless node comprising means for performing:

   - receiving, from a second wireless node, a first signal on a first frequency channel;
   - deriving at least one long-term quantity associated with at least one of the following: the first signal or the first frequency channel or the first signal and the first frequency channel, wherein the long-term quantity is one of a parameter that is substantially invariant over a duration longer than the transmission duration of a first message and a statistic that is measured over a duration longer than the transmission duration of the first message;
   - encrypting the first message by applying a function depending on the at least one long-term quantity to said first message; and
   - transmitting, to the second wireless node, the first encrypted message on a second frequency channel.

2. An apparatus according to claim 1, wherein the at least one long-term quantity comprises at least one of the following: an angle of arrival of the first signal, or a beam index used for reception of the first signal, or a path loss of the first frequency channel, or a covariance matrix of the first frequency channel, or coefficients of a delay-Doppler domain representation of the first frequency channel.

3. An apparatus according to claim 1 or claim 2, wherein the first frequency channel is different from the second frequency channel.

4. An apparatus according any preceding claim, wherein the means are further configured to perform:

   - identifying reciprocity between the first frequency channel and the second frequency channel; and
   - transmitting a second signal on the second frequency channel at least if reciprocity is identified between the first frequency channel and the second frequency channel.

5. An apparatus according to any preceding claim, wherein the means are further configured to perform:

   - using the at least one long-term quantity as a seed to a hash function;
   - deriving a security key of the first message using the hash function with the seed; and
   - encrypting the first message using the security key of the first message.

6. An apparatus according to any preceding claim, further comprising means for performing:

   - receiving, from the second wireless node, a third signal on the first frequency channel;
   - encrypting a second message using a security key of the first encrypted message and at least one long-term quantity associated with at least one of the following: the third signal or the first frequency channel or the third signal and the first frequency channel; and
   - transmitting, to the second wireless node, the second encrypted message on the second frequency channel.

7. An apparatus according to any preceding claim, wherein the means comprises:

   - at least one processor; and
   - at least one memory including computer program code, the at least one memory and computer program code configured to, with the at least one processor, cause the performance of the apparatus.

8. An apparatus for a second wireless node comprising means for performing:

- transmitting, to a first wireless node, a first signal on a first frequency channel;
- receiving, from the first wireless node, a first encrypted message on a second frequency channel;
- deriving at least one long-term quantity associated with at least one of the following: the first signal or the second frequency channel or the first signal and the second frequency channel, wherein the long-term quantity is one of a parameter that is substantially invariant over a duration longer than the transmission duration of the first message and a statistic that is measured over a duration longer than the transmission duration of the first message; and
- decrypting the encrypted first message using the at least one long-term quantity.

9.  An apparatus according to claim 8, wherein the at least one long-term quantity comprises at least one of an angle of departure of the first signal, or an angle of reception of the second signal, or a beam index used for transmission of the first signal, or a beam index used for reception of the second signal, or a path loss of the second frequency channel, or a covariance matrix of the second frequency channel, or coefficients of a delay-Doppler domain representation of the second frequency channel.

10. An apparatus according to claim 8 or claim 9, wherein the first frequency channel is different from the second frequency channel.

11. An apparatus according to any of claims 8 to 10, wherein the means are further configured to perform:

- identifying reciprocity between the first frequency channel and the second frequency channel;
- receiving a second signal on the second frequency channel at least if reciprocity is identified between the first frequency channel and the second frequency channel; and
- deriving the at least one long-term quantity associated with the first signal using the second signal.

12. An apparatus according to any of claims 8 to 11, wherein the means are further configured to perform:

- using the at least one long-term quantity as a seed to a hash function;
- deriving a security key of the first message using the hash function with the seed; and
- decrypting the first message using the security key of the first message.

13. An apparatus according to any of claims 8 to 12, wherein the means are further configured to perform:

- transmitting, to the first wireless node, a third signal on the first frequency channel;
- receiving, from the first wireless node, a second encrypted message on the second frequency channel; and
- decrypting the second encrypted message using a security key of the first encrypted message and at least one long-term quantity associated with at least one of the following: the third signal or the second frequency channel or the third signal and the second frequency channel.

14. An apparatus according to any of claims 8 to 13, wherein the means comprises:

- at least one processor; and
- at least one memory including computer program code, the at least one memory and computer program code configured to, with the at least one processor, cause the performance of the apparatus.

15. A method, comprising:

- receiving, from a wireless node, a first signal on a first frequency channel;
- deriving at least one long-term quantity associated with at least one of the following: the first signal or the first frequency channel or the first signal and the first frequency channel, wherein the long-term quantity is one of a parameter that is invariant over a duration longer than the transmission duration of a first message and a statistic that is measured over a duration longer than the transmission duration of the first message;
- encrypting the first message by applying a function depending on the at least one long-term quantity to said first message; and
- transmitting, to the wireless node, the first encrypted message on a second frequency channel.

16. A method, comprising:

- transmitting, to a wireless node, a first signal on a first frequency channel;
- receiving, from the wireless node, a first encrypted message on a second frequency channel;
- deriving at least one long-term quantity associated with at least one of the following: the first signal or the second frequency channel or the first signal and the second frequency channel, wherein the long-term quantity is one of a parameter that is substantially invariant over a duration longer than the transmission duration of the first message and a statistic that is measured over a duration longer than the transmission duration of the first message; and
- decrypting the encrypted first message using the at least one long-term quantity.

17. A computer program comprising instructions for causing an apparatus for a first wireless node to perform at least the following:

- receiving, from a second wireless node, a first signal on a first frequency channel;
- deriving at least one long-term quantity associated with at least one of the following: the first signal or the first frequency channel or the first signal and the first frequency channel, wherein the long-term quantity is one of a parameter that is substantially invariant over a duration longer than the transmission duration of a first message and a statistic that is measured over a duration longer than the transmission duration of the first message;
- encrypting the first message by applying a function depending on the at least one long-term quantity to said first message; and
- transmitting, to the second wireless node, the first encrypted message on a second frequency channel.

18. A computer program comprising instructions for causing an apparatus for a second wireless node to perform at least the following:

- transmitting, to a first wireless node, a first signal on a first frequency channel;
- receiving, from the first wireless node, a first encrypted message on a second frequency channel;
- deriving at least one long-term quantity associated with at least one of the following: the first signal or the second frequency channel or the first signal and the second frequency channel, wherein the long-term quantity is one of a parameter that is substantially invariant over a duration longer than the transmission duration of the first message and a statistic that is measured over a duration longer than the transmission duration of the first message; and
- decrypting the encrypted first message using the at least one long-term quantity.

**Patentansprüche**

1. Vorrichtung für einen ersten drahtlosen Knoten, umfassend Mittel zum Durchführen von Folgendem:

- Empfangen eines ersten Signals von einem zweiten drahtlosen Knoten auf einem ersten Frequenzkanal;
- Ableiten mindestens einer Langzeitgröße, die mindestens einem von Folgendem zugehörig ist: dem ersten Signal oder dem ersten Frequenzkanal oder dem ersten Signal und dem ersten Frequenzkanal, wobei die Langzeitgröße eines ist von einem Parameter, der über eine Dauer, die länger als die Übertragungsdauer einer ersten Nachricht ist, im Wesentlichen unveränderlich ist, und einer Statistik, die über eine Dauer, die länger als die Übertragungsdauer der ersten Nachricht ist, gemessen wird;
- Verschlüsseln der ersten Nachricht durch Anwenden einer Funktion, die von der mindestens einen Langzeitgröße abhängt, auf die erste Nachricht; und
- Übertragen der ersten verschlüsselten Nachricht an den zweiten drahtlosen Knoten auf einem zweiten Frequenzkanal.

2. Vorrichtung nach Anspruch 1, wobei die mindestens eine Langzeitgröße mindestens eines von Folgenden umfasst: einen Ankunftswinkel des ersten Signals oder einen für den Empfang des ersten Signals verwendeten Strahlindex oder einen Pfadverlust des ersten Frequenzkanals oder eine Kovarianzmatrix des ersten Frequenzkanals oder Koeffizienten einer Verzögerungs-Doppler-Darstellung des ersten Frequenzkanals.

3. Vorrichtung nach Anspruch 1 oder Anspruch 2, wobei sich der erste Frequenzkanal von dem zweiten Frequenzkanal unterscheidet.

4. Vorrichtung nach einem der vorstehenden Ansprüche, wobei die Mittel ferner konfiguriert sind zum Durchführen von Folgendem:

- Feststellen von Reziprozität zwischen dem ersten Frequenzkanal und dem zweiten Frequenzkanal; und
- Übertragen eines zweiten Signals auf dem zweiten Frequenzkanal, zumindest wenn Reziprozität zwischen dem ersten Frequenzkanal und dem zweiten Frequenzkanal festgestellt wird.

5. Vorrichtung nach einem der vorstehenden Ansprüche, wobei die Mittel ferner konfiguriert sind zum Durchführen von Folgendem:

- Verwenden der mindestens einen Langzeitgröße als Seed für eine Hash-Funktion;
- Ableiten eines Sicherheitsschlüssels der ersten Nachricht unter Verwendung der Hash-Funktion mit dem Seed; und
- Verschlüsseln der ersten Nachricht unter Verwendung des Sicherheitsschlüssels der ersten Nachricht.

6. Vorrichtung nach einem der vorstehenden Ansprüche, ferner umfassend Mittel zum Durchführen von Folgendem:

- Empfangen eines dritten Signals von einem zweiten drahtlosen Knoten auf dem ersten Frequenzkanal;
- Verschlüsseln einer zweiten Nachricht unter Verwendung eines Sicherheitsschlüssels der ersten verschlüsselten Nachricht und mindestens einer Langzeitgröße, die mindestens einem von Folgendem zugehörig ist: dem dritten Signal oder dem ersten Frequenzkanal oder dem dritten Signal und dem ersten Frequenzkanal; und
- Übertragen der zweiten verschlüsselten Nachricht an den zweiten drahtlosen Knoten auf dem zweiten Frequenzkanal.

7. Vorrichtung nach einem der vorstehenden Ansprüche, wobei die Mittel umfassen:

- mindestens einen Prozessor; und
- mindestens einen Speicher, der einen Computerprogrammcode enthält, wobei der mindestens eine Speicher und der Computerprogrammcode so konfiguriert sind, dass sie zusammen mit dem mindestens einen Prozessor die Betriebsdurchführung durch die Vorrichtung veranlassen.

8. Vorrichtung für einen zweiten drahtlosen Knoten, umfassend Mittel zum Durchführen von Folgendem:

- Übertragen eines ersten Signals auf einem ersten Frequenzkanal an einen ersten drahtlosen Knoten;
- Empfangen einer ersten verschlüsselten Nachricht von dem ersten drahtlosen Knoten auf einem zweiten Frequenzkanal;
- Ableiten mindestens einer Langzeitgröße, die mindestens einem von Folgendem zugehörig ist: dem ersten Signal oder dem zweiten Frequenzkanal oder dem ersten Signal und dem zweiten Frequenzkanal, wobei die Langzeitgröße eines ist von einem Parameter, der über eine Dauer, die länger als die Übertragungsdauer der ersten Nachricht ist, im Wesentlichen unveränderlich ist, und einer Statistik, die über eine Dauer, die länger als die Übertragungsdauer der ersten Nachricht ist, gemessen wird; und
- Entschlüsseln der verschlüsselten ersten Nachricht unter Verwendung der mindestens einen Langzeitgröße.

9. Vorrichtung nach Anspruch 8, wobei die mindestens eine Langzeitgröße mindestens eines von Folgenden umfasst: einen Abgangswinkel des ersten Signals oder einen Empfangswinkel des zweiten Signals oder einen für die Übertragung des ersten Signals verwendeten Strahlindex oder einen für den Empfang des zweiten Signals verwendeten Strahlindex oder einen Pfadverlust des zweiten Frequenzkanals oder eine Kovarianzmatrix des zweiten Frequenzkanals oder Koeffizienten einer Verzögerungs-Doppler-Darstellung des zweiten Frequenzkanals.

10. Vorrichtung nach Anspruch 8 oder Anspruch 9, wobei sich der erste Frequenzkanal von dem zweiten Frequenzkanal unterscheidet.

11. Vorrichtung nach einem der Ansprüche 8 bis 10, wobei die Mittel ferner konfiguriert sind zum Durchführen von Folgendem:

- Feststellen von Reziprozität zwischen dem ersten Frequenzkanal und dem zweiten Frequenzkanal;
- Empfangen eines zweiten Signals auf dem zweiten Frequenzkanal, zumindest wenn Reziprozität zwischen dem ersten Frequenzkanal und dem zweiten Frequenzkanal festgestellt wird; und
- Ableiten der mindestens einen Langzeitgröße, die dem ersten Signal zugehörig ist, unter Verwendung des zweiten Signals.

**12.** Vorrichtung nach einem der Ansprüche 8 bis 11, wobei die Mittel ferner konfiguriert sind zum Durchführen von Folgendem:

- Verwenden der mindestens einen Langzeitgröße als Seed für eine Hash-Funktion;
- Ableiten eines Sicherheitsschlüssels der ersten Nachricht unter Verwendung der Hash-Funktion mit dem Seed; und
- Entschlüsseln der ersten Nachricht unter Verwendung des Sicherheitsschlüssels der ersten Nachricht.

**13.** Vorrichtung nach einem der Ansprüche 8 bis 12, wobei die Mittel ferner konfiguriert sind zum Durchführen von Folgendem:

- Übertragen eines dritten Signals auf dem ersten Frequenzkanal an den ersten drahtlosen Knoten;
- Empfangen einer zweiten verschlüsselten Nachricht von dem ersten drahtlosen Knoten auf dem zweiten Frequenzkanal; und
- Entschlüsseln der zweiten verschlüsselten Nachricht unter Verwendung eines Sicherheitsschlüssels der ersten verschlüsselten Nachricht und mindestens einer Langzeitgröße, die mindestens einem von Folgendem zugehörig ist: dem dritten Signal oder dem ersten Frequenzkanal oder dem dritten Signal und dem ersten Frequenzkanal.

**14.** Vorrichtung nach einem der vorstehenden Ansprüche 8 bis 13, wobei die Mittel umfassen:

- mindestens einen Prozessor; und
- mindestens einen Speicher, der einen Computerprogrammcode enthält, wobei der mindestens eine Speicher und der Computerprogrammcode so konfiguriert sind, dass sie zusammen mit dem mindestens einen Prozessor die Betriebsdurchführung durch die Vorrichtung veranlassen.

**15.** Verfahren, umfassend:

- Empfangen eines ersten Signals von einem drahtlosen Knoten auf einem ersten Frequenzkanal;
- Ableiten mindestens einer Langzeitgröße, die mindestens einem von Folgendem zugehörig ist: dem ersten Signal oder dem ersten Frequenzkanal oder dem ersten Signal und dem ersten Frequenzkanal, wobei die Langzeitgröße eines ist von einem Parameter, der über eine Dauer, die länger als die Übertragungsdauer einer ersten Nachricht ist, im Wesentlichen unveränderlich ist, und einer Statistik, die über eine Dauer, die länger als die Übertragungsdauer der ersten Nachricht ist, gemessen wird;
- Verschlüsseln der ersten Nachricht durch Anwenden einer Funktion, die von der mindestens einen Langzeitgröße abhängt, auf die erste Nachricht; und
- Übertragen der ersten verschlüsselten Nachricht an den drahtlosen Knoten auf einem zweiten Frequenzkanal.

**16.** Verfahren, umfassend:

- Übertragen eines ersten Signals auf einem ersten Frequenzkanal an einen drahtlosen Knoten;
- Empfangen einer ersten verschlüsselten Nachricht von dem drahtlosen Knoten auf einem zweiten Frequenzkanal;
- Ableiten mindestens einer Langzeitgröße, die mindestens einem von Folgendem zugehörig ist: dem ersten Signal oder dem zweiten Frequenzkanal oder dem ersten Signal und dem zweiten Frequenzkanal, wobei die Langzeitgröße eines ist von einem Parameter, der über eine Dauer, die länger als die Übertragungsdauer der ersten Nachricht ist, im Wesentlichen unveränderlich ist, und einer Statistik, die über eine Dauer, die länger als die Übertragungsdauer der ersten Nachricht ist, gemessen wird; und
- Entschlüsseln der verschlüsselten ersten Nachricht unter Verwendung der mindestens einen Langzeitgröße.

**17.** Computerprogramm mit Anweisungen, die eine Vorrichtung für einen ersten drahtlosen Knoten veranlassen, mindestens Folgendes durchzuführen:

- Empfangen eines ersten Signals von einem zweiten drahtlosen Knoten auf einem ersten Frequenzkanal;
- Ableiten mindestens einer Langzeitgröße, die mindestens einem von Folgendem zugehörig ist: dem ersten Signal oder dem ersten Frequenzkanal oder dem ersten Signal und dem ersten Frequenzkanal, wobei die Langzeitgröße eines ist von einem Parameter, der über eine Dauer, die länger als die Übertragungsdauer einer ersten Nachricht ist, im Wesentlichen unveränderlich ist, und einer Statistik, die über eine Dauer, die länger als die Übertragungsdauer der ersten Nachricht ist, gemessen wird;

- Verschlüsseln der ersten Nachricht durch Anwenden einer Funktion, die von der mindestens einen Langzeitgröße abhängt, auf die erste Nachricht; und
- Übertragen der ersten verschlüsselten Nachricht an den zweiten drahtlosen Knoten auf einem zweiten Frequenzkanal.

**18.** Computerprogramm mit Anweisungen, die eine Vorrichtung für einen zweiten drahtlosen Knoten veranlassen, mindestens Folgendes durchzuführen:

- Übertragen eines ersten Signals auf einem ersten Frequenzkanal an einen ersten drahtlosen Knoten;
- Empfangen einer ersten verschlüsselten Nachricht von dem ersten drahtlosen Knoten auf einem zweiten Frequenzkanal;
- Ableiten mindestens einer Langzeitgröße, die mindestens einem von Folgendem zugehörig ist: dem ersten Signal oder dem zweiten Frequenzkanal oder dem ersten Signal und dem zweiten Frequenzkanal, wobei die Langzeitgröße eines ist von einem Parameter, der über eine Dauer, die länger als die Übertragungsdauer der ersten Nachricht ist, im Wesentlichen unveränderlich ist, und einer Statistik, die über eine Dauer, die länger als die Übertragungsdauer der ersten Nachricht ist, gemessen wird; und
- Entschlüsseln der verschlüsselten ersten Nachricht unter Verwendung der mindestens einen Langzeitgröße.

## Revendications

**1.** Appareil pour un premier noeud sans fil comprenant des moyens pour réaliser :

- la réception, à partir d'un deuxième noeud sans fil, d'un premier signal sur un premier canal de fréquence ;
- la dérivation d'au moins une quantité à long terme associée à au moins un des éléments suivants : le premier signal ou le premier canal de fréquence ou le premier signal et le premier canal de fréquence, dans lequel la quantité à long terme est un parmi un paramètre qui est sensiblement invariant sur une durée supérieure à la durée de transmission d'un premier message et une statistique qui est mesurée sur une durée supérieure à la durée de transmission du premier message ;
- le chiffrement du premier message en appliquant une fonction dépendant de l'au moins une quantité à long terme audit premier message ; et
- la transmission, au deuxième noeud sans fil, du premier message chiffré sur un deuxième canal de fréquence.

**2.** Appareil selon la revendication 1, dans lequel l'au moins une quantité à long terme comprend au moins l'un des éléments suivants : un angle d'arrivée du premier signal, un indice de faisceau utilisé pour la réception du premier signal, une perte de chemin du premier canal de fréquence, une matrice de covariance du premier canal de fréquence ou des coefficients d'une représentation de domaine retard-Doppler du premier canal de fréquence.

**3.** Appareil selon la revendication 1 ou la revendication 2, dans lequel le premier canal de fréquence est différent du deuxième canal de fréquence.

**4.** Appareil selon l'une des revendications précédentes, dans lequel les moyens sont en outre configurés pour réaliser :

- l'identification de la réciprocité entre le premier canal de fréquence et le deuxième canal de fréquence ; et
- la transmission d'un deuxième signal sur le deuxième canal de fréquence au moins si la réciprocité est identifiée entre le premier canal de fréquence et le deuxième canal de fréquence.

**5.** Appareil selon l'une des revendications précédentes, dans lequel les moyens sont en outre configurés pour réaliser :

- l'utilisation de l'au moins une quantité à long terme comme amorce pour une fonction de hachage ;
- la dérivation d'une clé de sécurité du premier message à l'aide de la fonction de hachage avec l'amorce ; et
- le chiffrement du premier message à l'aide de la clé de sécurité du premier message.

**6.** Appareil selon l'une des revendications précédentes, comprenant en outre des moyens pour réaliser :

EP 3 796 584 B1

- la réception, à partir du deuxième noeud sans fil, d'un troisième signal sur le premier canal de fréquence ;
- le chiffrement d'un deuxième message à l'aide d'une clé de sécurité du premier message chiffré et d'au moins une quantité à long terme associée à au moins l'un des éléments suivants : le troisième signal ou le premier canal de fréquence ou le troisième signal et le premier canal de fréquence ; et
- la transmission, au deuxième noeud sans fil, du deuxième message chiffré sur le deuxième canal de fréquence.

7. Appareil selon l'une des revendications précédentes, dans lequel les moyens comprennent :

- au moins un processeur ; et
- au moins une mémoire comportant un code de programme informatique, l'au moins une mémoire et le code de programme informatique étant configurés pour, avec l'au moins un processeur, provoquer la performance de l'appareil.

8. Appareil pour un deuxième noeud sans fil comprenant des moyens pour réaliser :

- la transmission, à un premier noeud sans fil, d'un premier signal sur un premier canal de fréquence ;
- la réception, à partir du premier noeud sans fil, d'un premier message chiffré sur un deuxième canal de fréquence ;
- la dérivation d'au moins une quantité à long terme associée à au moins un des éléments suivants : le premier signal ou le deuxième canal de fréquence, ou le premier signal et le deuxième canal de fréquence, dans lequel la quantité à long terme est un parmi un paramètre qui est sensiblement invariant sur une durée supérieure à la durée de transmission du premier message et une statistique qui est mesurée sur une durée supérieure à la durée de transmission du premier message ; et
- le déchiffrement du premier message chiffré à l'aide de l'au moins une quantité à long terme.

9. Appareil selon la revendication 8, dans lequel l'au moins une quantité à long terme comprend au moins un parmi un angle de départ du premier signal, un angle de réception du deuxième signal, un indice de faisceau utilisé pour la transmission du premier signal, un indice de faisceau utilisé pour la réception du deuxième signal, une perte de chemin du deuxième canal de fréquence, une matrice de covariance du deuxième canal de fréquence, ou des coefficients d'une représentation de domaine retard-Doppler du deuxième canal de fréquence.

10. Appareil selon la revendication 8 ou la revendication 9, dans lequel le premier canal de fréquence est différent du deuxième canal de fréquence.

11. Appareil selon l'une des revendications 8 à 10, dans lequel les moyens sont en outre configurés pour réaliser :

- l'identification de la réciprocité entre le premier canal de fréquence et le deuxième canal de fréquence ;
- la réception d'un deuxième signal sur le deuxième canal de fréquence au moins si la réciprocité est identifiée entre le premier canal de fréquence et le deuxième canal de fréquence ; et
- la dérivation de l'au moins une quantité à long terme associée au premier signal à l'aide du deuxième signal.

12. Appareil selon l'une des revendications 8 à 11, dans lequel les moyens sont en outre configurés pour réaliser :

- l'utilisation de l'au moins une quantité à long terme comme amorce pour une fonction de hachage ;
- la dérivation d'une clé de sécurité du premier message à l'aide de la fonction de hachage avec l'amorce ; et
- le déchiffrement du premier message à l'aide de la clé de sécurité du premier message.

13. Appareil selon l'une des revendications 8 à 12, dans lequel les moyens sont en outre configurés pour réaliser :

- la transmission, au premier noeud sans fil, d'un troisième signal sur le premier canal de fréquence ;
- la réception, à partir du premier noeud sans fil, d'un deuxième message chiffré sur le deuxième canal de fréquence ; et
- le déchiffrement du deuxième message chiffré à l'aide d'une clé de sécurité du premier message chiffré et d'au moins une quantité à long terme associée à au moins l'un des éléments suivants : le troisième signal ou le deuxième canal de fréquence, ou le troisième signal et le deuxième canal de fréquence.

14. Appareil selon l'une des revendications 8 à 13, dans lequel les moyens comprennent :

- au moins un processeur ; et
- au moins une mémoire comportant un code de programme informatique, l'au moins une mémoire et le code de programme informatique étant configurés pour, avec l'au moins un processeur, provoquer la performance de l'appareil.

15. Procédé, comprenant :

- la réception, à partir d'un noeud sans fil, d'un premier signal sur un premier canal de fréquence ;
- la dérivation d'au moins une quantité à long terme associée à au moins un des éléments suivants : le premier signal ou le premier canal de fréquence ou le premier signal et le premier canal de fréquence, dans lequel la quantité à long terme est un parmi un paramètre qui est invariant sur une durée supérieure à la durée de transmission d'un premier message et une statistique qui est mesurée sur une durée supérieure à la durée de transmission du premier message ;
- le chiffrement du premier message en appliquant une fonction dépendant de l'au moins une quantité à long terme audit premier message ; et
- la transmission, au noeud sans fil, du premier message chiffré sur un deuxième canal de fréquence.

16. Procédé, comprenant :

- la transmission, à un noeud sans fil, d'un premier signal sur un premier canal de fréquence ;
- la réception, à partir du noeud sans fil, d'un premier message chiffré sur un deuxième canal de fréquence ;
- la dérivation d'au moins une quantité à long terme associée à au moins un des éléments suivants : le premier signal ou le deuxième canal de fréquence, ou le premier signal et le deuxième canal de fréquence, dans lequel la quantité à long terme est un parmi un paramètre qui est sensiblement invariant sur une durée supérieure à la durée de transmission du premier message et une statistique qui est mesurée sur une durée supérieure à la durée de transmission du premier message ; et
- le déchiffrement du premier message chiffré à l'aide de l'au moins une quantité à long terme.

17. Programme informatique comprenant des instructions pour amener un appareil d'un premier noeud sans fil à réaliser au moins ce qui suit :

- la réception, à partir d'un deuxième noeud sans fil, d'un premier signal sur un premier canal de fréquence ;
- la dérivation d'au moins une quantité à long terme associée à au moins un des éléments suivants : le premier signal ou le premier canal de fréquence ou le premier signal et le premier canal de fréquence, dans lequel la quantité à long terme est un parmi un paramètre qui est sensiblement invariant sur une durée supérieure à la durée de transmission d'un premier message et une statistique qui est mesurée sur une durée supérieure à la durée de transmission du premier message ;
- le chiffrement du premier message en appliquant une fonction dépendant de l'au moins une quantité à long terme audit premier message ; et
- la transmission, au deuxième noeud sans fil, du premier message chiffré sur un deuxième canal de fréquence.

18. Programme informatique comprenant des instructions pour amener un appareil d'un deuxième noeud sans fil à réaliser au moins ce qui suit :

- la transmission, à un premier noeud sans fil, d'un premier signal sur un premier canal de fréquence ;
- la réception, à partir du premier noeud sans fil, d'un premier message chiffré sur un deuxième canal de fréquence ;
- la dérivation d'au moins une quantité à long terme associée à au moins un des éléments suivants : le premier signal ou le deuxième canal de fréquence, ou le premier signal et le deuxième canal de fréquence, dans lequel la quantité à long terme est un parmi un paramètre qui est sensiblement invariant sur une durée supérieure à la durée de transmission du premier message et une statistique qui est mesurée sur une durée supérieure à la durée de transmission du premier message ; et
- le déchiffrement du premier message chiffré à l'aide de l'au moins une quantité à long terme.

# FIGURE 1

<u>110</u>                                    <u>130</u>

<u>210</u>

| <u>220</u> |                          | <u>225</u> |

<u>230</u>

| <u>240</u> |

<u>250</u>

| <u>260</u> |                          | <u>265</u> |

<u>270</u>

| <u>280</u> |

# FIGURE 2

**FIGURE 3**

<u>410</u>

| Receiving, from a second wireless node, a first signal on a first frequency channel |

<u>420</u>

| Deriving at least one long-term quantity associated with the first signal and/or the first frequency channel, wherein the long-term quantity is one of a parameter that is substantially invariant over a duration longer than the transmission duration of a first message and a statistic that is measured over a duration longer than the transmission duration of the first message |

<u>430</u>

| Encrypting the first message using the at least one long-term quantity |

<u>440</u>

| Transmitting, to the second wireless node, the first encrypted message on a second frequency channel |

# FIGURE 4

<u>510</u>

| Transmitting, to a first wireless node, a first signal on a first frequency channel |

<u>520</u>

| Receiving, from the first wireless node, a first encrypted message on a second frequency channel |

<u>530</u>

| Deriving at least one long-term quantity associated with the first signal and/or the second frequency channel, wherein the long-term quantity is one of a parameter that is substantially invariant over a duration longer than the transmission duration of a first message and a statistic that is measured over a duration longer than the transmission duration of the first message |

<u>540</u>

| Decrypting the encrypted first message using the at least one long-term quantity |

# FIGURE 5

**EP 3 796 584 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3518491 A1